# EUROPEAN PATENT SPECIFICATION

(11) **EP 0 862 714 B1**
(45) Date of publication and mention of the grant of the patent: **19.02.2003**
(21) Application number: 96938030.2
(22) Date of filing: 21.11.1996
(51) Int. Cl.: F24C 7/08, H05B 3/68

(54) **A COOKING SURFACE WITH CONTROLS**
KOCHFLÄCHE MIT REGELEINRICHTUNG
SURFACE DE CUISSON ET SON SYSTEME DE COMMANDE

(30) Priority: 21.11.1995 DK 131095
(43) Date of publication of application: 09.09.1998
(73) Proprietor: AKTIEBOLAGET ELECTROLUX, 105 45 Stockholm (SE)
(72) Inventor: ESKILDSEN, Christian, DK-5591 Gelsted (DK)
(74) Representative: Svahn, Göran
(86) International application number: DK9600479
(87) International publication number: WO97019298

(56) References cited:
- EP-A- 0 498 735
- WO-A-95/16230
- WO-A-95/16334
- DE-A- 4 007 680
- GB-A- 2 154 405
- US-A- 3 215 817
- US-A- 3 953 711
- US-A- 5 243 171

## Description

The invention relates to a cooking surface comprising distributed sources of energy and monitoring devices for monitoring the thermal load on the surface which control the power supply during use and which switch off the power in the case of no load or insufficient load being present.

Present-day cooking surfaces generally consist of between one and five hot zones which are distributed below a tough and heat resistant top surface with no specific delimitations other than markings. A hot zone fitting to the size of the cooking utensil is selected and energized, and the cooking proceeds, possibly controlled automatically, either by temperature sensors directly influenced by the contents or by sensors for the thermal load comprised by the cooking utensil and the food to be cooked. Such sensors at least have the ability to switch off the power in case there is no load in order that overheating of the cooking utensil or a potentially dangerous situation with a very hot surface is avoided.

From US 5243171 a food service system is known where a number of trays can be arranged in a shelf structure. When the shelves are built in heating zones and control means, whereby sensors can detect the temperature in items, especially food trays, put on the shelves. By relating this information to the control system the system can control and monitor the food temperature during storage and/or heating. This kind of system is especially used in facilities where large numbers of meals have to be prepared and served which enable complete meal trays to be prepared some time before the meals are to be served and so that the food in the dishes on the trays are to be heating up subsequently for serving at the appropriate time and at the appropriate serving temperature.

In early days, a hot top surface for cooking in e.g. restaurants had no delimitation of cooking zones, but the front part (the part nearest to the user) was the hottest, and the rear part was considered the "back burner" and sliding from the front to the back permitted bringing the food to its desired temperature at the front and letting it continue the cooking at the rear.

In order to obtain a similar function in a modern guise, i.e. a continuous passage from the hotter front to the relatively cooler back of a cooking surface, DE 40 07 680 describes how a number of hot zones are fitted in matrix fashion in conjunction with a vitroceramic cooking surface in order that the cooking utensil may be slid along the surface towards the back when a lower temperature is needed. Sensors connected to the hot zones only switch on those hot zones which are covered by the cooking utensil at any one instant. The described construction aims at avoiding the use of switches or other user activated controls since switching-on is automatic and the temperature is dependent on the placement of the cooking utensil.

While the above construction gives a good simulation of the temperature distribution in early days without the constant power consumption and heat loss, there is perceived a need for a cooking surface which will service a number of cooking utensils simultaneously and at the same time to provide individual power supply in dependence of the food to be cooked while still ensuring full protection against overheating. This need is not addressed by the described German publication DE 40 07 680.

A construction which addresses this need is particular in that each monitoring device communicates with a central unit comprising data processing chips whereby the thermal load is determined and contiguous areas (P) are determined which constitute an image of the instantaneous distribution of cooking utensils (P) on the cooking surface, whereby sources of energy in the contiguous areas can be switched on. In a further advantageous embodiment the number of sources of energy is large, with a minimum of 5 sources, preferably a minimum of 20 sources, per cooking utensil to be serviced, and that each source is only energized when its thermal load is determined as sufficient. In this manner, a cooking utensil may be moved to any place on the cooking surface to make room for other cooking utensils and still retain the cooking desired. One standard size cooking utensil has a diameter of 15 cm, and the number range specified allows proper regulation of the energy supply to each cooking utensil. The supply of a large number of very small sources of energy ensures an even heating of both small and large cooking utensils and enables the heating of square or rectangular cooking utensils which until now have not been heatable in a relevant manner, except by putting them in an oven. The determination of thermal load may be performed using devices according to international applications PCT/DK94/00456 and PCT/DK94/00457, to which reference is specifically made. Alternatively, an array of infrared sensors may be used.

In a preferred embodiment of the invention the arrangement of the sources of energy is in a matrix fashion. This means that power supply to each source may occur via columns and rows which reduces the number of switching elements needed to be the sum of columns and rows rather than equal to the total number of sources of heat.

In another embodiment the sources of energy are arranged with a minimum of non-heating surface between them. This corresponds to having the maximum of sources of energy within a circular perimeter of a cooking utensil. In this case, the wiring will reflect that such a configuration is in reality only a distortion of a matrix arrangement as above described.

In a preferred embodiment the determination of thermal load occurs in conjunction with each source of energy. In this way, not only is each source of energy only energized when needed, but the precision is enhanced.

In a further preferred embodiment each point of determination of thermal load communicates with a central control unit which performs clustering of heat load data and calculation of an average heat load by cooking utensils, in order to contol the energy supply to the individual sources of energy. This embodiment makes use of image recognition methods which are easily implemented in data processing chips. The information that a thermal load is sufficient from a number of thermal load sensors allows clustering into contiguous areas which constitute an image of the instantaneous distribution of cooking utensils on the cooking surface.

Due to surface irregularities which may appear in some cooking utensil bottoms a higher precision in thermal load determination may be obtained by averaging the individial determinations in a single cluster, and hence it may be avoided that an individual source of heat is switched off due to a local lack of thermal load, although sources of heat immediately surrounding it are still switched on.

In a further embodiment the sources of heat are constituted by halogen bulbs which are individually energized according to the scheme relevant to this construction. Among other advantages accruing from this construction is the low thermal capacity of each heat source and its immediate surroundings, enabling a faster reaction to a cooling requirement similar to the desirable qualities of e.g. gas heating.

In a further advantageous embodiment the heat is generated in the cooking utensil by induction coils which are individually energized in the manner of induction hotplates according to the scheme relevant to this construction. Thereby the top surface temperatures may be held at a still lower value which is a distinct advantage in the present environment comprising a large number of electronic switches.

The invention will be described in greater detail in the following with reference to the drawing, in which
Fig. 1 shows part of the top of a cooker in which the distribution of a large number of heat sources with thermal load sensors is indicated,
Fig. 2 shows the perimeter of a cooking utensil covering a number of energy sources with thermal load sensors, as well as lines for communcation and energy supply, and
Fig. 3 shows a block diagram of the interconnections between the large number of heat sources with thermal load sensors and a control unit.

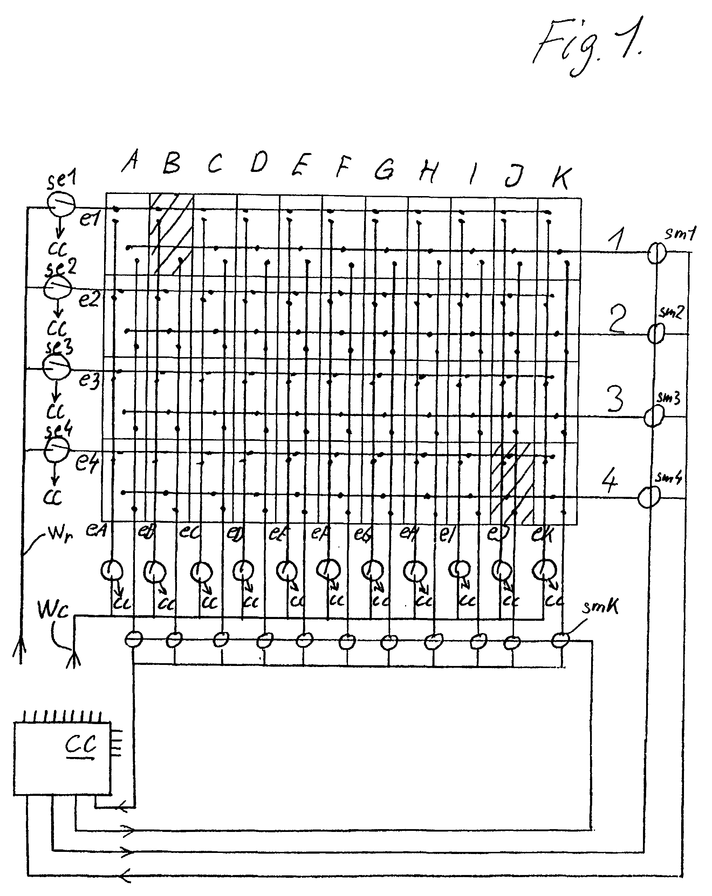

In Fig. 1 is shown a grid which represents part of the top of a cooker according to the invention. The grid defines cells by means of row indications (1, 2, 3, 4) and column indications (A, B, C, ...., K), it being understood that this section of 44 cells is only a part of the total surface of a cooker in which each cell may be defined by coordinates, such as 1b or 4j. These are indicated by hatching. Each cell has provisions for energy supply and provisions for measuring the thermal load of the cell, such as a probe to which a connection may be established.

The cells are supplied with electrical energy by means of a grid of wires (e1, e2, e3, e4) and (eA, eB, eC, ..., eK) respectively. These wires are in turn connected to main supply wires Wr and Wc by in such a manner that only those cells which are simultaneously connected to both horizontal Wr and vertical Wc main supplies are acting as energy sources in the top of the cooker. The selection of grid wires occurs through electronic switches in each wire (se1, se2, se3, se4) and (seA, seB, seC, ..., seK). These switches are controlled by a main controller CC for the cooktop.

In a similar fashion, each cell is connected to a grid of sense wires (m1, m2, m3, m4) and (mA, mB, mC, ... mK) respectively which lead to two data buses Mr and Mc via strobing switches (sm1, sm2, sm3, sm4) and (smA, smB, smC, ...., smK). By means of cyclic strobing, each cell is addressed in turn, and the controller obtains information on the thermal load status of each cell.

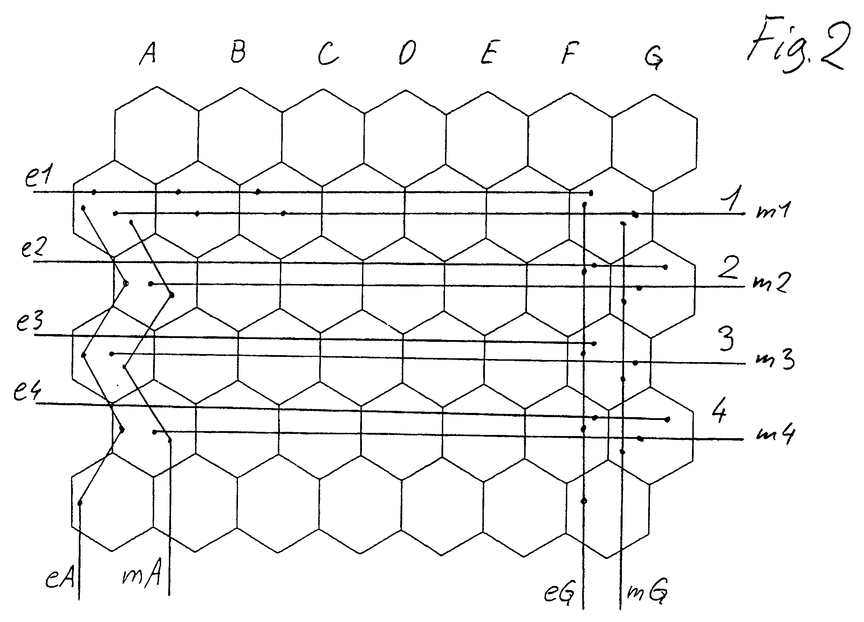

In Fig. 2 is shown part of a cooktop with a different tessellation. Each cell 1A through 4G is hexagonal which permits a closer approximation to a circular bottom of a cooking vessel. Although a larger number of rows and a smaller number of columns is shown than in Fig. 1, the designation of the cells has been retained. It will be recognized that the addressing of energy sources and of sensors is identical to the rectangular type grid, although the column grid wires may take two different courses as shown at eA, mA and eG, mG respectively.

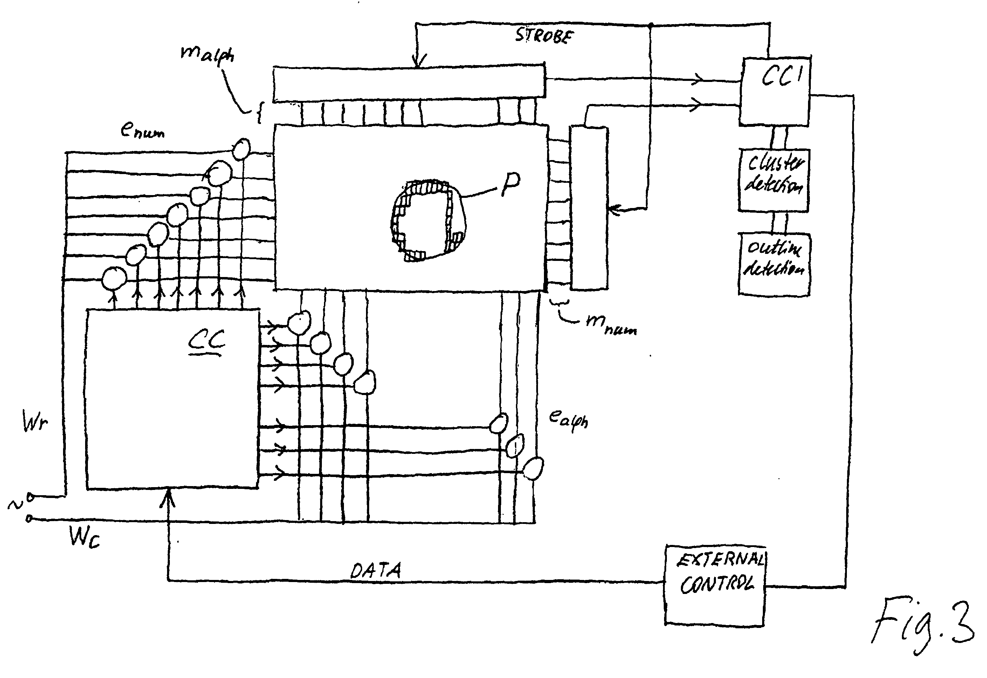

In Fig. 3 is shown a block diagram of the interconnection between the supply and feedback systems and the power supply unit and control unit respectively. According to one embodiment of the invention a primitive image processing system is involved in that information on clusters of similarly indicating sensors at any one time permits an outline of a thermal load area to be defined. The cooking vessel (P) is regarded as being positioned within this outline, and the power supplied to each cell is equalized. Alternatively, a subcluster of cells representing a low load area within the outline may be supplied with a higher level of energy in order to decrease the cooking time, letting the standard reading from the majority of cells within the outline determine if an increasing low load situation, designating dry cooking or removal of a cooking vessel is occuring.

In one embodiment of the invention, a cooking surface is supplied with a vast number of halogen bulbs with individual reflectors supported by a perforated plate, one hole for each bulb.

## Claims

1. A cooking surface comprising distributed sources of energy and monitoring devices for monitoring the thermal load on the surface, which control the power supply during use and which switch off the power in case of no load being present, **characterised in that** each monitoring device communicates with a central unit comprising data processing chips whereby the thermal load is determined and contiguous areas are determined which constitute an image of the instantaneous distribution of cooking utensils (P) on the cooking surface, whereby sources of energy in the contiguous areas can be switched on.

2. A cooking surface according to claim 1, **characterised in that** a minimum of 5 sources, preferred a minimum of 20 sources is provided per utensil (P) to be serviced.

3. A cooking surface according to claim 1, **characterised in that** the sources of energy are arranged in a matrix fashion.

4. A cooking surface according to claim 2, **characterised in that** the sources of energy are arranged with a minimum of non-heated surface between them.

5. A cooking surface according to any of the preceding claims, **characterised in that** the determination of thermal load occurs in conjunction with each source of energy.

6. A cooking surface according to claim 4, **characterised in that** each point of determination of thermal load communicates with a central control unit which performs clustering of heat load data and calculation of an average heat load by cooking utensils, in order to control the energy supply to the individual sources of energy.

7. A cooking surface according to any of the above claims, **characterised in that** the sources of energy are constituted by halogen bulbs which are individually energized according to the scheme relevant to this construction.

8. A cooking surface according to any of the above claims, **characterised in that** the heat is generated in the cooking utensil by induction coils which are individually energized in the manner of induction hotplates according to the scheme relevant to this construction.

## Patentansprüche

1. Kochfläche, umfassend verteilte Energiequellen und Kontrollvorrichtungen zum Kontrollieren der Wärmebelastung auf der Fläche, welche die Leistungsversorgung während der Verwendung steuern und welche die Leistung ausschalten, falls keine Belastung vorhanden ist, **dadurch gekennzeichnet, dass** jede Kontrollvorrichtung mit einer zentralen Einheit in Verbindung steht, welche Datenverarbeitungschips umfasst, wodurch die Wärmebelastung bestimmt wird und angrenzende Bereiche bestimmt werden, welche ein Bild der augenblicklichen Verteilung von Kochgeräten (P) auf der Kochfläche darstellen, wodurch Energiequellen in den angrenzenden Bereichen eingeschaltet werden können.

2. Kochfläche nach Anspruch 1, **dadurch gekennzeichnet, dass** ein Minimum von 5 Quellen, bevorzugt ein Minimum von 20 Quellen, pro zu unterhaltendem Gerät (P) bereitgestellt wird.

3. Kochfläche nach Anspruch 1, **dadurch gekennzeichnet, dass** die Energiequellen in einer Matrixweise angeordnet sind.

4. Kochfläche nach Anspruch 2, **dadurch gekennzeichnet, dass** die Energiequellen mit einem Minimum an nichterwärmter Fläche zwischen ihnen angeordnet sind.

5. Kochfläche nach einem der vorhergehenden Ansprüche, **dadurch gekennzeichnet, dass** die Bestimmung von Wärmebelastung in Verbindung mit jeder Energiequelle erfolgt.

6. Kochfläche nach Anspruch 4, **dadurch gekennzeichnet, dass** jeder Bestimmungspunkt von Wärmebelastung mit einer zentralen Steuereinheit in Verbindung steht, welche Gruppierung von Wärmebelastungsdaten und Berechnung einer durchschnittlichen Wärmebelastung durch Kochgeräte durchführt, um die Energieversorgung der individuellen Energiequellen zu steuern.

7. Kochfläche nach einem der vorhergehenden Ansprüche, **dadurch gekennzeichnet, dass** die Energiequellen durch Halogenglühlampen dargestellt sind, welche gemäß dem Schema, das dieser Konstruktion entspricht, individuell mit Energie versorgt werden.

8. Kochfläche nach einem der vorhergehenden Ansprüche, **dadurch gekennzeichnet, dass** die Wärme im Kochgerät durch Induktionsspulen erzeugt wird, welche in der Art von Induktionsheizplatten gemäß dem Schema, das dieser Konstruktion entspricht, individuell mit Energie versorgt werden.

## Revendications

1. Surface de cuisson comprenant des sources d'énergie réparties et des dispositifs de surveillance pour surveiller la charge thermique sur la surface, qui commandent l'alimentation en énergie pendant l'utilisation et qui coupent l'énergie dans le cas d'une absence de charge, **caractérisée en ce que** chaque dispositif de surveillance communique avec une unité centrale comprenant des composants de traitement de données de telle manière que la charge thermique soit déterminée et que des zones contiguës soient déterminées qui constituent une image de la répartition instantanée des ustensiles de cuisson (P) sur la surface de cuisson, de telle manière que des sources d'énergie dans les zones contiguës puissent être mises en marche.

2. Surface de cuisson selon la revendication 1, **caractérisée en ce qu'**un minimum de 5 sources, de préférence un minimum de 20 sources, sont prévues par ustensiles (P) à desservir.

3. Surface de cuisson selon la revendication 1, **caractérisée en ce que** les sources d'énergie sont agencées sous forme matricielle.

4. Surface de cuisson selon la revendication 2, **caractérisée en ce que** les sources d'énergie sont agencées avec un minimum de surface non chauffée entre elles.

5. Surface de cuisson selon l'une quelconque des revendications précédentes, **caractérisée en ce que** la détermination de charge thermique s'effectue en relation avec chaque source d'énergie.

6. Surface de cuisson selon la revendication 4, **caractérisée en ce que** chaque point de détermination de charge thermique communique avec une unité de commande centrale qui effectue le regroupement des données de charge thermique et le calcul d'une charge thermique moyenne par ustensile de cuisson, afin de commander l'alimentation en énergie des sources d'énergie individuelles.

7. Surface de cuisson selon l'une quelconque des revendications précédentes, **caractérisée en ce que** les sources d'énergie sont constituées par des ampoules halogènes qui sont alimentées individuellement conformément à la méthode associée à cette construction.

8. Surface de cuisson selon l'une quelconque des revendications précédentes, **caractérisée en ce que** la chaleur est générée dans l'ustensile de cuisson par des bobines d'induction qui sont alimentées individuellement à la manière de plaques chauffantes à induction selon la méthode associée à cette construction.
